# EUROPEAN PATENT SPECIFICATION

(11) **EP 0 630 391 B1**
(45) Date of publication and mention of the grant of the patent: **12.02.1997**
(21) Application number: 93908146.9
(22) Date of filing: 12.03.1993
(51) Int. Cl.: C08L 67/02, C08L 35/06

(54) **THERMOPLASTIC POLYMER COMPOSITION**
THERMOPLASTISCHE HARZZUSAMMENSETZUNG
COMPOSITION POLYMERE THERMOPLASTIQUE

(30) Priority: 13.03.1992 BE 9200255
(43) Date of publication of application: 28.12.1994
(73) Proprietor: DSM N.V., 6411 TE Heerlen (NL)
(72) Inventor: FAIRLEY, Gary, Robert, Gerard, D-6132 ES Sittard (NL); REID, Valerie, Melville, Chrystie, NL-6212 EP Maastricht (NL); MAAG, Louis, Richard, NL-6166 GM Geleen (NL)
(86) International application number: NL9300058
(87) International publication number: WO9318088

(56) References cited:
- EP-A- 0 042 724
- EP-A- 0 042 737
- WO-A-90/06956

## Description

The invention relates to a thermoplastic polymer composition comprising the following components:
a. a thermoplastic polyester and
b. a polymer comprising vinylaromatic monomer units and dicarboxylic acid anhydride monomer units and/or imide compounds derived therefrom.

Such a polymer composition is known from EP-A-0 042 724, EP-A-0 042 737 and EP-B0,273,897. In these documents polymer compositions of polyethylene terephthalate and a styrene-maleic anhydride copolymer are described. A disadvantage of the known polymer compositions is that its impact strength is too low.

The object of the invention is to provide a polymer composition which does not suffer from the above disadvantage.

This is achieved in that component b. contains at least 1% by weight of spirodilactone monomer units. This is surprising since component b. in itself is a relatively brittle polymer. Preferably, component b. contains at least 2% by weight of spirodilactone monomer units and more especially component b. contains at least 4% by weight of spirodilactone monomer units.

A further advantage of the polymer composition according to the invention is that in addition to improved impact strength it also has a higher deflection temperature under load (Vicat). As a result, the polymer composition according to the invention can be used in articles which are exposed to elevated temperatures.

Yet a further advantage of the polymer composition according to the invention is that it has an improved thermal stability compared with the known polymer composition. As a result, mouldings which are produced from this polymer composition can be used in articles which are exposed for lengthy periods to elevated temperatures, such as, for example, automotive components which are mounted in the vicinity of the engine.

Yet a further advantage of the polymer composition according to the invention is that a moulding produced from a polymer composition according to the present invention delaminates less rapidly than a moulding produced from the known polymer composition.

Suitable thermoplastic polyesters for use as component a. can be prepared in a known manner by esterifying monomers having two acid-functional groups and diols and/or monomers having one acid-functional group and one hydroxyl group, an acid-functional group meaning a functional group chosen from amongst acid group, acid chloride group and anhydride group. In a preferred embodiment of the invention the thermoplastic polyester is prepared from terephthalic acid and alkanediols.

Preferably, polybutylene terephthalate (PBT) or polyethylene terephthalate (PET) are used as thermoplastic polyesters in the polymer composition according to the invention.

Component b. can be prepared from a copolymer c. Copolymer c. is itself prepared by allowing a mixture which contains vinyl monomers and dicarboxylic acid anhydride monomer units and/or imide compounds derived therefrom to polymerise in a known manner. Copolymer c. preferably has a weight-average molecular weight which is between 30,000 and 200,000 g/mol. Imide monomer units can be introduced, after the polymerisation of copolymer c., by imidating copolymer c., at elevated temperature and pressure, with, for example, an aqueous ammonia solution. This method is known, for example, from US-A-4,129,619. The imidation preferably takes place after the conversion of copolymer c. to component b.

A copolymer c. which contains less than 50 mol% of dicarboxylic acid anhydride monomer units and/or imide compounds derived therefrom, calculated relative to the total quantity of monomer units of which copolymer c. is built up, can be prepared by introducing, in a continuous copolymerisation, a mixture of a small amount of unsaturated dicarboxylic acid anhydride and a large amount of vinyl monomer into a polymerisation vessel, with vigorous stirring and at elevated temperature, and at the same time removing an equal amount of the polymerisation mixture from the polymerisation vessel, as described, for example, in US-A-2,971,939.

Thereafter, copolymer c. is heated for a certain time to a temperature of, preferably, 200 - 270°C, as is known from WO 90/06956. Preferably, the heating is carried out in the presence of a catalyst, so that the reaction occurs more rapidly and at lower temperatures. It is particularly preferred that the catalyst should be a strongly basic catalyst which is volatile, so that it can be evaporated off after the end of the reaction. The catalyst can be used either undiluted or diluted, for example as a component of a buffer. Examples of suitable catalysts are tertiary amines. Triethylamine and 1,4-diazobicyclo[2,2,2]octane (DABCO) are particularly suitable. During the heating, a reaction takes place in the polymer chains, with one structural element built up of two dicarboxylic acid anhydride monomer units and one vinylaromatic monomer unit (Formula I) reacting to give spirodilactone (Formula II) in accordance with the equation below 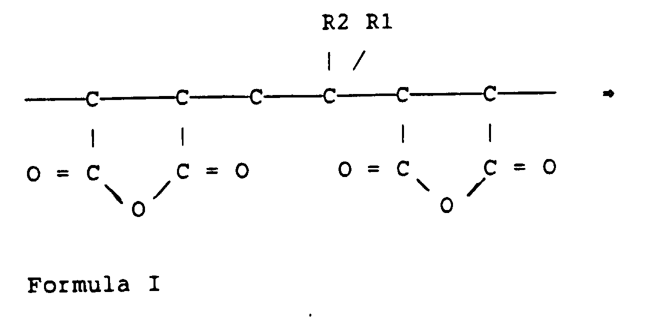 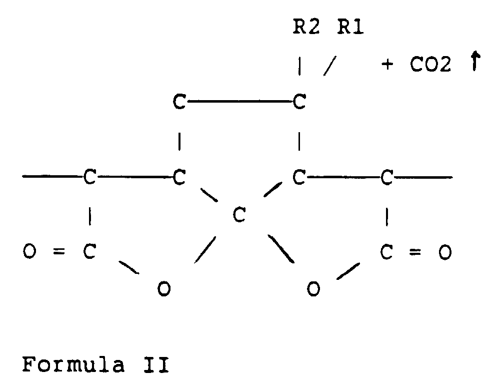 In these formulae, R¹ is an aryl group and R² is methyl or hydrogen.

Examples of vinylaromatic monomer units which can be used are styrene, α-methylstyrene, para-methylstyrene or mixtures thereof. Preferably, styrene is used as the vinylaromatic monomer.

Examples of dicarboxylic acid anhydride monomer units which can be used are chloromaleic anhydride, maleic anhydride, dichloromaleic anhydride, citraconic anhydride, cyclohexylmaleic anhydride, benzylmaleic anhydride, itaconic anhydride, phenylmaleic anhydride, aconitic anhydride, propylmaleic anhydride, diethylmaleic anhydride and mixtures of these. Preferably, maleic anhydride is used as the dicarboxylic acid anhydride monomer unit.

Examples of imide monomer units which can be used are N-phenylmaleimide, maleimide, citraconimide, itaconimide, aconitimide, N-methylmaleimide, N-butylmaleimide and mixtures thereof. Preferably, N-phenylmaleimide is used as the imide monomer unit.

In a preferred embodiment of the invention, styrene is used as the vinylaromatic monomer unit and maleic anhydride, preferably in an amount of 18-50 mol% calculated relative to the total quantity of monomer units of which copolymer c. is composed, is used as the dicarboxylic acid anhydride monomer unit in copolymer c.

In addition to the monomer units mentioned, component b. can also contain small quantities of other monomer units, such as, for example, acrylic acid, methacrylic acid, acrylate compounds and methacrylate compounds, alkenes, such as, for example, ethylene or propylene, and unsaturated carboxylic acids and/or compounds derived therefrom.

Further, an elastomer can be added, as an impact modifier, to the polymer composition according to the invention. In general, an elastomer having a glass transition temperature of below -10°C, preferably below - 40°C, is used for this purpose. Examples of suitable elastomers are butadiene rubber, EPDM rubber, acrylate rubber and silicone rubber. Preferably, the elastomer is grafted with component a. or b., or with polymers which are miscible with component a. and/or b.

It is further possible that the polymer composition according to the invention comprises a further rigid polymer, such as, for example, styrene-maleimide copolymer, in order to achieve a further increase in the deflection temperature under load (Vicat).

Preferably, the ratio of the amount of component a.:component b. in the polymer composition is between 1:6 and 6:1, more particularly between 1:3 and 3:1, with the ratios being based on the weights of the components. Of course the usual additives can be added to the polymer composition according to the invention, such as, for example, pigments, stabilisers, processing aids, flame retardants and (reinforcing) fillers.

The properties of the polymer composition can be further improved by adding a small quantity preferably 1-10 wt.% of polyacrylate to the polymer composition.

The invention is further explained with reference to the Examples which follow.

### Examples I-IV

Various components b. were prepared by extruding styrene-maleic anhydride copolymers (copolymer c.) having anhydride monomer contents of 18, 22, 28 and 32% by weight and a weight-average molecular weight of 110,000 g/mol in a co-rotating W&PO ZSK 40 twin-screw extruder, supplied by Werner and Pfleiderer, Germany. The throughput was 20 kg/h at a melt temperature of 250°C. TEA was continuously injected into the extruder and mixed with the molten polymer. By varying the amounts of TEA thus added to the polymer, samples 1-6 of component b., having a varying content of spirodilactone monomer units, were obtained.

The content of maleic anhydride in the samples and in the copolymers c. were determined with the aid of a Perkin Elmer FT-IR apparatus of type 1760 FT-IR. From this, the content of spirodilactone monomer units in the samples was calculated, on the basis of the equation given earlier in the text of the present application and the assumption that no side-reactions took place. The glass transition temperature (T_{g}) was determined with a Perkin Elmer DSC apparatus of type DSC 7. The sample size was 10-15 mg and the rate of heating was 10°C/min. The results are reported in Table I.

**TABLE I**

| Sample | MA in c (% by weight) | Content of TEA (% by weight) | MA in b (% by weight) | Spirodilactone (% by weight) | Tg (°C) |
|---|---|---|---|---|---|
| 1 | 18 | 0 | 18 | 0 | 147 |
| 2 | 28 | 0.5 | 18 | 10 | 171 |
| 3 | 32 | 0.3 | 18 | 14 | 185 |
| 4 | 22 | 0 | 22 | 0 | 150 |
| 5 | 28 | 0.1 | 21 | 7 | 167 |
| 6 | 32 | 0.1 | 21 | 11 | 182 |
| MA = maleic anhydride | | | | | |

Mixtures were prepared from samples 1-3 of component b. with PBT or PET as component a. by mixing granules of the two components in a ratio of 50:50% by weight, calculated relative to the weight of the total quantity of granules, and then extruding the mixture via the abovementioned twin-screw extruder with a throughput of 20 kg/h at a melt temperature of 250°C.

The PBT used was ARNITE T06-200 and the PET used was ARNITE A04-900, both supplied by DSM, the Netherlands.

The softening point (Vicat, ISO 306/B) and the impact strength (IZOD, ISO 180) of the mixtures were determined. The results thereof are shown in Table II.

**TABLE II**

| Sample | Component b sample | Polyester | IZOD (kJ/m²) | Vicat (°C) |
|---|---|---|---|---|
| A | 1 | PBT | 4.3 | 118.9 |
| I | 2 | PBT | 8.6 | 131.4 |
| II | 3 | PBT | 7.0 | 134.2 |
| B | 1 | PET | 6.2 | 111.9 |
| III | 2 | PET | 11.3 | 120.1 |
| IV | 3 | PET | 8.8 | 122.7 |

It can thus be concluded that when use is made of spirodilactone monomer units the impact strength increases considerably and the Vicat softening point also rises. Furthermore there was markedly less delamination in the fracture surface of the impact strength-tested samples having spirodilactone monomer units.

### Examples V-VIII

Mixtures were prepared from samples 1-3 of component b. with PBT or PET as component a. and a core-shell rubber, by mixing granules of the various components in a ratio of 40:40:20% by weight, calculated relative to the weight of the total quantity of granules, and subsequently extruding the mixture by means of the abovementioned twin-screw extruder under the same conditions as in Examples I-IV.

The PBT used was ARNITE T06-200 and the PET used was ARNITE A04-900, both supplied by DSM, the Netherlands. The core-shell rubber used was PARALOID EXL 3647, supplied by Röhm & Haas, France.

The softening point (Vicat, ISO 306/B) and the impact strength (IZOD, ISO 180, but unnotched) of the mixtures were determined. The results thereof are shown in Table III.

**TABLE III**

| Sample | Component b sample | Polyester | IZOD (kJ/m²) | Vicat (°C) |
|---|---|---|---|---|
| C | 1 | PBT | -- | 125.2 |
| V | 2 | PBT | -- | 144.3 |
| VI | 3 | PBT | -- | 148.7 |
| D | 1 | PET | 30.0 | 121.6 |
| VII | 2 | PET | 48.8 | 141.9 |
| VIII | 3 | PET | 53.6 | 142.9 |

This again shows clearly that when component c. comprises spirolactone monomer units the impact strength is improved and the Vicat softening point also increases significantly.

### Examples IX-XII

Mixtures were prepared from samples 4-6 of component b. with PBT or PET as component a. and ABS, by mixing granules of the various components in a ratio of 20:50:30% by weight, calculated relative to the weight of the total quantity of granules, and subsequently extruding the mixture via the abovementioned twin-screw extruder under the conditions of Examples I-IV.

The PBT used was ARNITE T06-200 and the PET used was ARNITE A04-900, both supplied by DSM, the Netherlands. The ABS used was RONFALIN TZ 220, supplied by DSM, the Netherlands.

The softening point (Vicat, ISO 306/B) and the impact strength (IZOD, ISO 180) of the mixtures were determined.

The results thereof are shown in Table IV.

**TABLE IV**

| Sample | Component b sample | Polyester | IZOD (kJ/m²) | Vicat (°C) |
|---|---|---|---|---|
| E | 4 | PBT | 5.4 | 123.3 |
| IX | 5 | PBT | 7.9 | 131.1 |
| X | 6 | PBT | 6.8 | 135.1 |
| F | 4 | PET | 10.6 | 117.1 |
| XI | 5 | PET | 12.4 | 119.2 |
| XII | 6 | PET | 9.7 | 119.0 |

Here again it can be seen that when component c. comprises spirodilactone monomer units the impact strength increases and the Vicat softening point also rises.

## Claims

1. Thermoplastic polymer composition, comprising the following components:
a. a thermoplastic polyester and
b. a polymer comprising vinylaromatic monomer units and dicarboxylic acid anhydride monomer units and/or imide compounds derived therefrom,
characterised in that component b. contains at least 1% by weight of spirodilactone monomer units.

2. Polymer composition according to Claim 1, characterised in that component b. contains at least 2% by weight of spirodilactone monomer units.

3. Polymer composition according to Claim 1, characterised in that component b. contains at least 4% by weight of spirodilactone monomer units.

4. Polymer composition according to any one of Claims 1-3, characterised in that the vinylaromatic monomer unit is styrene.

5. Polymer composition according to any one of Claims 1-4, characterised in that the dicarboxylic acid anhydride monomer unit is maleic anhydride.

6. Polymer composition according to any one of Claims 1-5, characterised in that the thermoplastic polyester is polyethylene terephthalate.

7. Polymer composition according to any one of Claims 1-6, characterised in that the thermoplastic polyester is polybutylene terephthalate.

8. Polymer composition according to any one of Claims 1-7, characterised in that the polymer composition contains an elastomer as an impact modifier.

9. Polymer composition according to any one of Claims 1-8, characterised in that the ratio of component a.:component b. is between 1:6 and 6:1.

10. Polymer composition according to any one of Claims 1-9, characterised in that the ratio of component a.: component b. is between 1:3 and 3:1.

## Patentansprüche

1. Thermoplastische Polymerzusammensetzung, welche die folgenden Komponenten umfaßt:
a. einen thermoplastischen Polyester und
b. ein Polymer mit vinylaromatischen Monomereinheiten und Dicarbonsäureanhydrid-Monomereinheiten und/oder hievon abgeleiteten Imid-Verbindungen,
dadurch gekennzeichnet, daß die Komponente b. zumindest 1 Masse-% Spirodilacton-Monomereinheiten enthält.

2. Polymerzusammensetzung nach Anspruch 1, dadurch gekennzeichnet, daß die Komponente b. zumindest 2 Masse-% Spirodilacton-Monomereinheiten enthält.

3. Polymerzusammensetzung nach Anspruch 1, dadurch gekennzeichnet, daß die Komponente b. zumindest 4 Masse-% Spirodilacton-Monomereinheiten enthält.

4. Polymerzusammensetzung nach einem der Ansprüche 1 bis 3, dadurch gekennzeichnet, daß die vinylaromatische Monomereinheit Styrol ist.

5. Polymerzusammensetzung nach einem der Ansprüche 1 bis 4, dadurch gekennzeichnet, daß die Dicarbonsäureanhydrid-Monomereinheit Maleinsäureanhydrid ist.

6. Polymerzusammensetzung nach einem der Ansprüche 1 bis 5, dadurch gekennzeichnet, daß der thermoplastische Polyester Polyethylenterephthalat ist.

7. Polymerzusammensetzung nach einem der Ansprüche 1 bis 6, dadurch gekennzeichnet, daß der thermoplastische Polyester Polybutylenterephthalat ist.

8. Polymerzusammensetzung nach einem der Ansprüche 1 bis 7, dadurch gekennzeichnet, daß die Polymerzusammensetzung ein Elastomer als Schlagmodifikator enthält.

9. Polymerzusammensetzung nach einem der Ansprüche 1 bis 8, dadurch gekennzeichnet, daß das Verhältnis von Komponente a. zu Komponente b. zwischen 1:6 und 6:1 beträgt.

10. Polymerzusammensetzung nach einem der Ansprüche 1 bis 9, dadurch gekennzeichnet, daß das Verhältnis von Komponente a. zu Komponente b. zwischen 1:3 und 3:1 beträgt.

## Revendications

1. Composition polymère thermoplastique, comprenant les composants suivants :
a. un polyester thermoplastique et
b. un polymère comprenant des motifs de monomère vinylaromatique et des motifs de monomère anhydride dicarboxylique et/ou des composés imide dérivés de ceux-ci,
caractérisée en ce que le composant b. contient au moins 1 % en poids de motifs de monomère spirodilactone.

2. Composition polymère selon la revendication 1, caractérisée en ce que le composant b. contient au moins 2 % en poids de motifs de monomère spirodilactone.

3. Composition polymère selon la revendication 1, caractérisée en ce que le composant b. contient au moins 4 % en poids de motifs de monomère spirodilactone.

4. Composition polymère selon l'une quelconque des revendications 1 à 3, caractérisée en ce que le motif de monomère vinylaromatique est le styrène.

5. Composition polymère selon l'une quelconque des revendications 1 à 4, caractérisée en ce que le motif de monomère anhydride dicarboxylique est l'anhydride maléique.

6. Composition polymère selon l'une quelconque des revendications 1 à 5, caractérisée en ce que le polyester thermoplastique est le poly(téréphtalate d'éthylène).

7. Composition polymère selon l'une quelconque des revendications 1 à 6, caractérisée en ce que le polyester thermoplastique est le poly(téréphtalate de butylène).

8. Composition polymère selon l'une quelconque des revendications 1 à 7, caractérisée en ce que la composition polymère contient un élastomère en tant qu'agent de modification de la résistance au choc.

9. Composition polymère selon l'une quelconque des revendications 1 à 8, caractérisée en ce que le rapport composant a.: composant b. est compris entre 1:6 et 6:1.

10. Composition polymère selon l'une quelconque des revendications 1 à 9, caractérisée en ce que le rapport composant a.:composant b. est compris entre 1:3 et 3:1.
